# EUROPEAN PATENT SPECIFICATION

(11) **EP 0 771 852 B1**
(45) Date of publication and mention of the grant of the patent: **25.02.2004**
(21) Application number: 96307684.9
(22) Date of filing: 23.10.1996
(51) Int. Cl.: C08L 69/00, C08K 5/523, C08K 5/092

(54) **Flame retardant thermoplastic composition containing aromatic polycarbonate resins and a rubber modified graft copolymer**
Flammfeste, thermoplastische Zusammensetzung enthaltend aromatisches Polycarbonatharz und ein kautschukmodifiziertes Pfropfcopolymer
Composition ignifugée thermoplastique contenant des polycarbonates aromatiques et un copolymère greffé modifié par du caoutchouc

(30) Priority: 01.11.1995 US 551680
(43) Date of publication of application: 07.05.1997
(73) Proprietor: GENERAL ELECTRIC COMPANY, Schenectady, NY 12345 (US)
(72) Inventor: Gaggar, Satish Kumar, Parkersburg, West Virginia 26101 (US); Chen, Fuh-Sheng Fred, Parkersburg, West Virginia 26101 (US); Vilasagar, Shripathy, Parkersburg, West Virginia 26101 (US)
(74) Representative: Szary, Anne Catherine, Dr.

(56) References cited:
- EP-A- 0 272 441
- EP-A- 0 345 522
- EP-A- 0 351 648
- EP-A- 0 363 608
- EP-A- 0 714 943
- EP-A- 0 714 949
- DE-A- 4 309 142
- LOMBARDO B S ET AL: "INFLUENCE OF ABS TYPE ON MORPHOLOGY AND MECHANICAL PROPERTIES OF PC/ABS BLENDS" JOURNAL OF APPLIED POLYMER SCIENCE, vol. 54, no. 11, 12 December 1994, pages 1697-1720, XP000512067
- ELVERS, B. ET AL.: "Ullmann's Encyclopedia of Industrial Chemistry" 1992 XP002049694 *volume A21, p. 639-643; 5.3.1*

## Description

The present invention relates to flame retardant thermoplastic compositions, and more particularly relates to flame retardant thermoplastic compositions containing an aromatic polycarbonate resin, a rubber modified graft copolymer, and a phosphate flame retardant.

### Description of the Related Art

Flame retarded compositions containing acrylonitrile-butadiene-styrene (ABS) copolymers, a phosphate, and a polytetrafluoroethylene material are known, see Haaf et al., U.S. 4,107,232, issued August 15, 1978. Flame resistant thermoplastic molding compositions containing (a) an aromatic polycarbonate (b) a ABS-graft copolymer, (c) a thermoplastic polymer such as styrene-acrylonitrile copolymer, (d) a halogen compound, (e) a flame retardant synergist and (f) a tetrafluoroethylene polymer (PTFE) are known, see Lindner et al., U.S. Patent 4,810,739, issued March 7, 1989. The utilization of phosphate flame retardants in ABS/aromatic polycarbonate blend compositions with PTFE is also known, but such compositions can exhibit higher than desired viscosities for a given rubber loading level and izod impact strength level.

DE-A-4309142 discloses flameproofed moulding compositions comprising aromatic polycarbonates, ABS graft polymers, copolymers and a flame-protection combination comprising red phosphorus, phosphate or phosphonate esters, antimony trioxide or boron phosphate, and tetrafluorethylene polymer, characterized in that the red phosphorus and the phosphorus compounds are added as a batch in pastille (briquette) form.

Consequently, there is a desire to provide flame retardant vinyl aromatic-unsaturated nitrile-rubber graft copolymer/aromatic polycarbonate blend compositions exhibiting reduced levels of viscosity without a reduction in Izod impact properties.

### Summary of the Invention

The present invention involves a flame retardant thermoplastic composition comprising (a) an aromatic polycarbonate resin, (b) a vinyl aromatic-unsaturated nitrile rigid resin, (c) a vinyl aromatic-unsaturated nitrile-rubber graft copolymer containing a C₃₀-C₁₀₈ polyacid, (d) a phosphate and (e) a tetrafluoroethylene polymer. The compositions exhibit reduced levels of viscosity while maintaining Izod impact levels for a given rubber loading.

### Detailed Description of the Invention

A thermoplastic composition is provided comprising (a) an aromatic polycarbonate resin present at a level of from 60 to 90 weight percent based on the total weight of the composition; (b) a vinyl aromatic-unsaturated nitrile rigid resin present at a level of from 2 to 15 percent by weight based on the total weight of the composition; (c) a graft copolymer present at a level of from 2 to 10 percent by weight based on the total weight of the composition, said graft copolymer comprising (i) a rubber substrate with a Tg of less than 0°C present at a level of from 40 to 90 weight percent based on the total weight of the graft copolymer, (ii) a superstrate grafted to said substrate, said superstrate with a Tg greater than 20°C being derived from a compound selected from the group consisting of vinyl aromatics, unsaturated nitriles, alkyl (alkyl) acrylates and mixtures thereof; and (iii) a polyacid selected from the group consisting of C₃₀ to C₁₀₈ polyacids; (d) a phosphate flame retardant present at a level of from 3 to 12 percent by weight based on the total weight of the composition, and (e) a tetrafluoroethylene polymer present at a level of from 0.05 to 2 percent by weight based on the total weight of the composition. The composition exhibits reduced levels of viscosity without a loss in Izod impact properties for a given rubber loading level, and further exhibits desirable heat/humidity aging Izod impact retention properties.

The aromatic polycarbonate resin preferably comprises a moderate molecular weight polycarbonate polymer and a low molecular weight polycarbonate. Preferably the aromatic polycarbonate resin is present at a level of from 60 to 90 percent by weight based on the total weight of the composition, more preferably from 75 to 85 percent by weight thereof, and most preferably from 78 to 82 percent by weight thereof. Preferably the moderate molecular weight polycarbonate polymer is present in the composition at a level of from 60 to 80 percent by weight based on the total weight of the composition, more preferably from 70 to 75 percent by weight thereof, and most preferably from 71 to 73 percent by weight thereof; and preferably the low molecular weight polycarbonate resin is present at a level of from 0 to 15 percent by weight based on the total weight of the composition, more preferably from 2 to 15 percent by weight thereof, even more preferably from 3 to 8 percent by weight thereof, and most preferably from 4 to 6 percent by weight thereof.

Polycarbonate resins suitable for use in this invention, are preferably aromatic polycarbonate resins. with respect to aromatic polycarbonate resins, these can be made by those skilled in this art or can be obtained from a variety of commercial sources. They may be prepared by reacting a dihydric phenol with a carbonate precursor, such as phosgene, a haloformate or a carbonate ester. Typically, they will have recurring structural units of the formula: 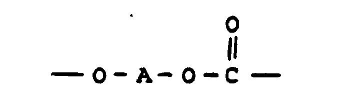 wherein A is a divalent aromatic radical of the dihydric phenol employed in the polymer producing reaction. Preferably, the aromatic carbonate polymers have an intrinsic viscosity ranging from 0.30 to 1.0 dl/g (measured in methylene chloride at 25°C.). By dihydric phenols is meant mononuclear or polynuclear aromatic compounds containing two hydroxy radicals, each of which is attached to a carbon atom of an aromatic nucleus. Typically, dihydric phenols include 2,2-bis-(4-hydroxyphenyl)propane; 2.2-bis-(3,5-dimethyl-4-hydroxyphenyl) propane; 4,4'-di-hydroxydiphenyl ether; bis(2-hydroxyphenyl)methane, mixtures thereof and the like. The preferred aromatic carbonate polymer is a homopolymer derived from 2,2-bis(4-hydroxyphenyl) propane (bisphenol-A).

The aromatic polycarbonate resin may be replaced in whole or in part with a poly(ester carbonate) resin. Poly(ester carbonates) for use in the invention are known and can be obtained commercially. Generally, they are copolyesters comprising recurring carbonate groups 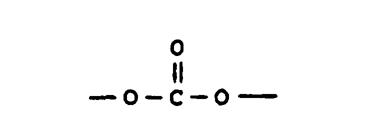 carboxylate groups 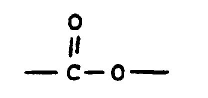 and aromatic carbocyclic groups in the linear polymer chain, in which at least some of the carboxylate groups and at least some of the carbonate groups are bonded directly to ring carbon atoms of the aromatic carbocyclic groups. These poly(ester carbonates) in general, are prepared by reacting a difunctional carboxylic acid, such as phthalic acid, isophtalic acid, terephthalic acid, homophthalic acid, o-, m-, and p-phenylenediacetic acid, the polynuclear aromatic acids, such as diphenic acid, 1,4-naphthalic acid, mixtures of any of the foregoing, and the like. with a dihydric phenol and a carbonate precursor, of the types described above. A particularly useful poly(ester carbonate) is derived from bisphenol-A, isophthalic acid, terephthalic acid, or a mixture of isophthalic acid and terephthalic acid, or the reactive derivatives of these acids such as terephthaloyl dichloride, or a mixture thereof, and phosgene. The molar proportions of dihydroxy diaryl units can range from 1:0.30-0.80:0.70-0.20 and the molar range of terephthalate units to isophthalate units can range from 9:1 to 2:8 in this preferred family of resins.

The moderate molecular weight aromatic polycarbonate resin preferably has a weight average molecular weight of between 30,000 and 80,000, for example, between 30,000 and 60,000, and for further example, between 35,000 and 40,000.

The low molecular weight aromatic polycarbonate resin preferably has a weight average molecular weight of between 2,000 and 20,000, for example between 5,000 and 10,000, and further, for example, between 6,000 and 9.000.

The vinyl aromatic-unsaturated nitrile (may also be referred to generally as a vinyl aromatic-vinyl cyanide polymer) rigid polymer is preferably present in the composition at a level of from 2 to 15 percent by weight based on the total weight of the composition, more preferably from 3 to 8 percent by weight thereof, and most preferably from 4 to 6 percent by weight thereof.

Suitable vinyl aromatic-unsaturated nitrile rigid polymers used in this invention are prepared from the monovinylidene aromatic monomers (first monomer) and unsaturated nitrile monomers (second monomer). The compositional ratio of the first monomer to the second may range from 95/5 to 50/50 preferably 85/15 to 60/40. Additional monomer(s) may optionally replace 0 to 50% of one or both of the first and second monomers.

The weight average molecular weight of the vinyl aromatic-unsaturated nitrile rigid polymer is designed to be in the range of 10,000 to 250,000. Preferred rigid polymers include copolymers of styrene and acrylonitrile, and copolymers of methylmethacrylate with acrylonitrile and styrene.

These vinyl aromatic-unsaturated nitrile rigid polymers may be polymerized either by emulsion, emulsion-suspension, suspension or bulk techniques well known in the art. Furthermore, the rigid polymers may be produced either by continuous, semibatch or batch processes.

The vinyl aromatic-unsaturated nitrile rigid polymer is preferably a low molecular weight polymer. The low molecular weight vinyl aromatic-unsaturated nitrile rigid polymer may have a weight average molecular weight of between 10,000 and 60,000, for example, between 15,000 and 50,000. Preferably the vinyl aromatic-unsaturated nitrile rigid polymer is a styrene-acrylonitrile copolymer. Suitable vinyl aromatic monomers and suitable unsaturated nitrile monomers are set out below.

The graft copolymer useful in the composition comprises (i) the rubber substrate, (ii) a rigid polymeric superstrate portion grafted to the rubber substrate, and (iii) a polyacid selected from the group consisting of C₃₀ to C₁₀₈ polyacids. The rubber substrate is preferably present in the impact modifier composition (graft copolymer composition) at a level of from 40 to 90 percent by weight based on the total weight of the graft copolymer composition, more preferably from 40 to 85 percent by weight thereof, and more preferably 50 to 85 percent by weight thereof and most preferably from 65 to 85 percent by weight thereof; the rigid superstrate is preferably present at a level of from 10 to 60 percent by weight based on the total weight of the graft copolymer, preferably from 15 to 60 percent by weight thereof, more preferably from 15 to 50 percent by weight thereof, and most preferably from 15 to 35 percent by weight thereof; and the polyacid is preferably present at a level of from 0.25 to 5 percent by weight based on the total weight of the graft copolymer, more preferably from 0.75 to 3.5 percent by weight thereof, and most preferably from 1.5 to 2.75 percent by weight thereof.

Examples of rubbery polymers for the substrate include: conjugated dienes, copolymers of a diene with styrene, acrylonitrile, methacrylonitrile or C₁ to C₈ alkyl acrylate which contain at least 50% (preferably at least 65% by weight) conjugated dienes, polyisoprene or mixtures thereof; olefin rubbers i.e. ethylene propylene copolymer (EPR) or ethylene propylene non-conjugated diene (EPDM); silicone rubbers; or C₁ or C₈ alkyl acrylate homopolymers or copolymers with butadiene and/or styrene. The acrylic polymer may also contain up to 5% of one or more polyfunctional crosslinking agents such as alkylenediol di(meth)acrylates, alkylenetriol tri(meth)acrylates, polyester di(meth)acrylates, divinylbenzene, trivinylbenzene, butadiene, isoprene and optionally graftable monomers such as, triallyl cyanurate, triallyl isocyanurate, allyl (meth)acrylate, diallyl maleate, diallyl fumarate, diallyl adipate, triallyl esters of citric acid or mixtures of these agents.

The diene rubbers may preferably be polybutadiene, polyisoprene and copolymers of butadiene with up to 35% by weight of comonomers such as styrene, acrylonitrile, methylmethacrylate or C₁-C₈-alkylacrylate which are produced by aqueous radical emulsion polymerisation and may optionally be cross-linked with di or tri-vinyl and/or allyl monomers or mixtures of such monomers or structures.

The rubbers may be cross-linked C₁-C₈-alkylacrylate, in particular C₂-C₈-alkylacrylate, optionally in admixture with up to 15% by weight of comonomers such as styrene, methylmethacrylate, butadiene, vinyl methyl ether or acrylonitrile and optionally up to 5% by weight of a polyfunctional crosslinking comonomer, e.g. divinylbenzene, glycol-bis-acrylates. bisacrylamides, phosphoric acid triallylester, citric acid triallylester, allylesters of acrylic acid or methacrylic acid. triallylcyanurate, triallylisocyanurate. Also suitable are mixtures of diene- and alkylacrylate rubbers and rubbers which have a so-called core/sheath structure, e.g. a core of diene rubber and a sheath of acrylate or vice versa.

Specific conjugated diene monomers normally utilized in preparing the rubber substrate of the graft polymer are generically described by the following formula: 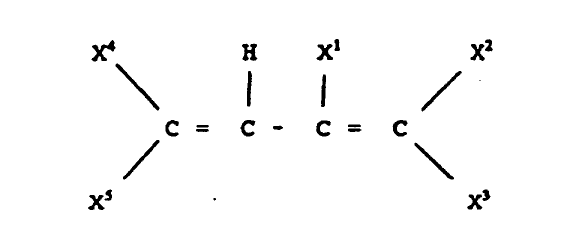 wherein each X¹, X², X³, X⁴ and X⁵ is individually selected from the group consisting of hydrogen, alkyl groups containing from one to five carbon atoms, chlorine or bromine. Examples of dienes that may be used are butadiene, isoprene, 1,3-heptadiene, methyl-1,3-pentadiene, 2,3-dimethylbutadiene, 2-ethyl-1,3-pentadiene 1,3- and 2,4-hexadienes, chloro and bromo substituted butadienes such as dichlorobutadiene, bromobutadiene, dibromobutadiene, mixtures thereof, and the like. A preferred conjugated diene is 1,3 butadiene.

The substrate polymer, as mentioned, is preferably a conjugated diene polymer such as polybutadiene, polyisoprene, or a copolymer, such as butadiene-styrene. butadiene-acrylonitrile, or the like. The rubbery polymeric substrate portion exhibits a glass transition temperature (Tg) of less than about 0°C.

Mixtures of one or more rubbery polymers previously described as substrate for preparing the graft polymers, or mixtures of one or more graft polymers disclosed herein may also be employed. Furthermore, the rubber may comprise either a block or random copolymer.

Monovinylidene aromatic monomers (vinyl aromatic monomers) which may be employed in making of the superstrate include styrene, alpha-methyl styrene, halostyrenes i.e. dibromostyrene, mono or di alkyl, alkoxy or hydroxy substitute groups on the nuclear ring of the monovinylidene aromatic monomer i.e. vinyl toluene, vinylxylene, butylstyrene, parahydroxystyrene or methoxystyrene or mixtures thereof. The monovinylidenearomatic monomers utilized are generically described by the following formula: 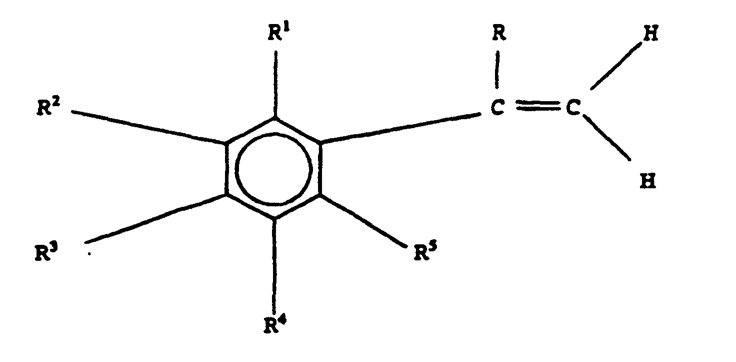 wherein each R¹, R², R³, R⁴ and R⁵ is individually selected from the group consisting of hydrogen, alkyl groups of 1 to 5 carbon atoms, cycloalkyl, aryl, alkaryl, aralkyl, alkoxy, aryloxy, and halogens. R is selected from the group consisting of hydrogen, alkyl groups of 1 to 5 carbon atoms and halogens such as bromine and chlorine. Examples of substituted vinylaromatic compounds include styrene, 4-methylstyrene, 3,5-diethylstyrene, 4-n-propylstyrene, α-methylstyrene, α-methyl vinyltoluene, α-chlorostyrene, α-bromostyrene, dichlorostyrene, dibromostyrene, tetrachlorostyrene, mixtures thereof and the like. The preferred monovinylidene aromatic monomers used are styrene and/or α-methylstyrene.

Monomers which may be used in combination with the monovinylidene aromatic monomer and vinyl cyanide monomers include C₁ to C₈ alkyl or aryl substituted acrylate, C₁ to C₈ alkyl, aryl or haloaryl substituted methacrylate, acrylic acid, methacrylic acid, itaconic acid, acrylamide, N-substituted acrylamide or methacrylamide, maleic anhydride, maleimide, N-alkyl, aryl or haloaryl substituted maleimide, glycidyl (meth)acrylates, hydroxy alkyl (meth)acrylates or mixtures thereof. The unsaturated nitrile (acrylonitrile or substituted acrylonitrile) or acrylic acid esters are described generically by the following formula: 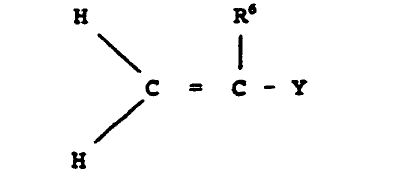 wherein R⁶ may be selected from the same group set out for R as previously defined and Y is selected from the group consisting of cyano and carbalkoxy groups wherein the alkoxy group of the carbalkoxy contains from one or about twelve carbon atoms. Examples of such monomers include acrylonitrile. ethacrylonitrile, methacrylonitrile, α-chloroacrylonitrile, α-bromoacrylonitrile, methyl acrylate, methyl methacrylate, ethyl acrylate, butyl acrylate, propylacrylate, isopropyl acrylate and mixtures thereof. The preferred unsaturated nitrile monomer is acrylonitrile and the preferred acrylic acid esters are ethyl acrylate and methyl methacrylate. It is also preferred that the acrylic acid esters, when included, are employed in combination with styrene or acrylonitrile.

The number average molecular weight of the grafted rigid superstrate is designed to be in the range of 10,000 to 350,000. The ratio of the first monomer to the second monomer may range from 100/0 to 50/50 preferably 85/15 to 60/40. Additional monomer(s) may optional replace 0 to 50% of one or both of the first and second monomers. Preferred graft superstrates include copolymers of styrene and acrylonitrile, copolymers of α-methylstyrene and acrylonitrile, and methylmethacrylate polymers or copolymers with up to 50% by weight of C₁-C₈ alkylacrylates, acrylonitrile or styrene.

These graft copolymers may be polymerized either by emulsion or combined processes such as emulsion-suspension or other emulsion techniques well known in the art. Furthermore, these rubber modified monovinylidene graft copolymers may be produced either by continuous, semibatch or batch processes.

The preferred impact modifier compositions (graft copolymer compositions) are compositions which comprise amounts of a graft copolymer selected from the group consisting of acrylonitrile-butadiene-styrene graft copolymers, and methylmethacrylate-acrylonitrile-butadiene-styrene graft copolymers, butylacrylate-styrene-acrylonitrile graft copolymers. and acrylonitrile-ethylacrylate-styrene graft copolymers.

Specific examples of monovinylidene graft copolymers include but are not limited to the following: acrylonitrile-butadiene-styrene (ABS), acrylonitrile-styrene-butyl acrylate (ASA), methylmethacrylate-acrylonitrile-butadiene-styrene (MABS), and acrylonitrile-ethylene-propylene-non-conjugated diene-styrene (AES).

Antioxidants such as thio ester antioxidants and hindered phenols may be added to the impact modifier. The present invention preferably utilizes (adds to the emulsion) an antioxidant composition which contains an amount of polyacid surfactant. The antioxidant may be in the form of an antioxidant emulsion.

The polyacid is preferably present in the graft copolymer at a level of from 0.25 to 5 percent by weight based on the total weight of the graft copolymer composition, more preferably present at a level of from 0.75 to 3.5 percent by weight thereof, more preferably is present at a level of from 1.5 to 2.75 percent by weight thereof. The polyacids have from 30 to 108 carbon atoms (C₃₀ to C₁₀₈), more preferably from C₃₂ to C₆₀. The polyacid component may be in the form of an admixture of polyacids, and is preferably substantially (>50 percent by weight) di and/or triacids, and more preferably substantially dimerized fatty acids and/or trimerized fatty acids. Preferably the polyacid in the form of carboxylate salts of the polyacid function are surfactants, emulsifiers or soaps. The dimerized fatty acid soaps that are useful in the emulsifying agents are soaps of polycarboxylic acids resulting from the polymerization of drying oil or semi-drying oil fatty acids. Suitable fatty acids include polyunsaturated fatty acids, such as linoleic acid, as well as mixtures of fatty acids that contain a substantial amount of polyunsaturated acids, such as soybean oil fatty acids and tall oil fatty acids. Such acids may be dimerized, for example, by heating them under pressure in the presence of an alkaline catalyst. The term "dimerized fatty acids" as used herein is intended to include the mixture of acids resulting from the dimerization of drying oil or semi-drying oil fatty acids. This mixture ordinarily includes a major amount of dimeric acids, trimeric acids and higher polymeric acids(and smaller amounts of unpolymerized (monomeric) acids). Examples include the following but are not limited to these structures:

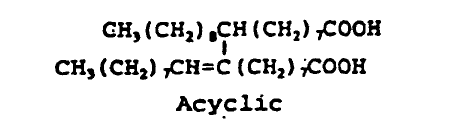

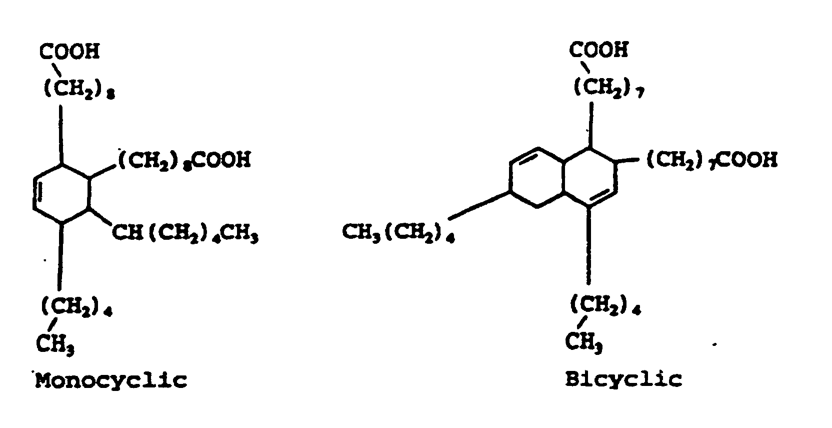

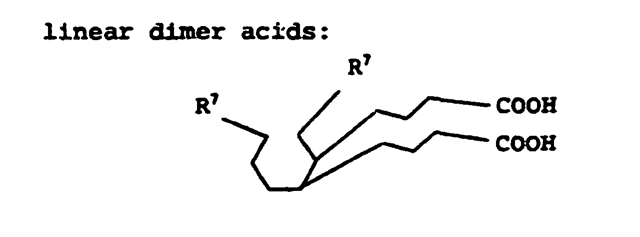

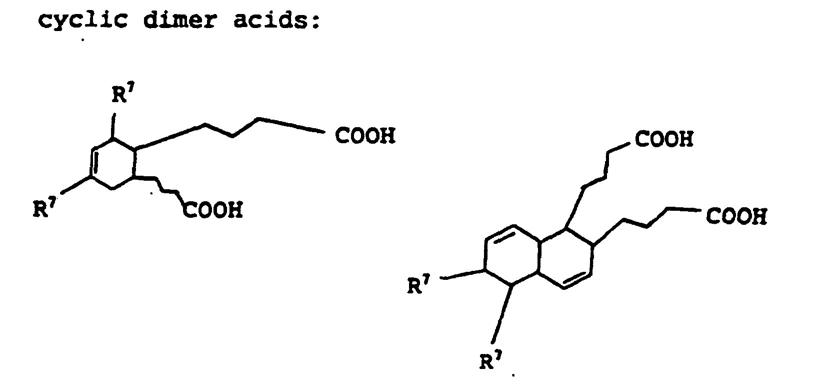

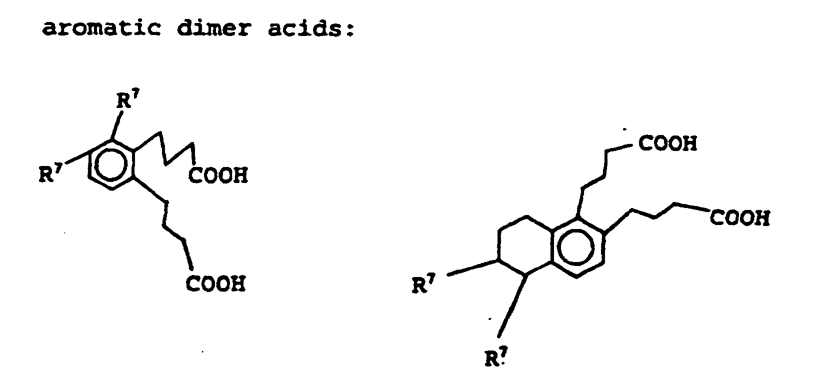

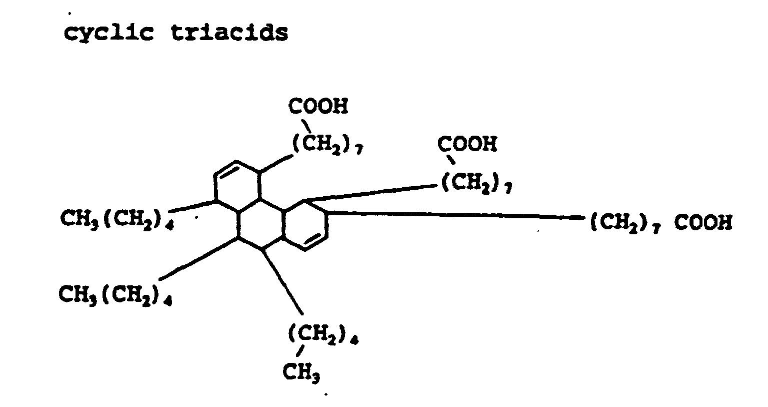

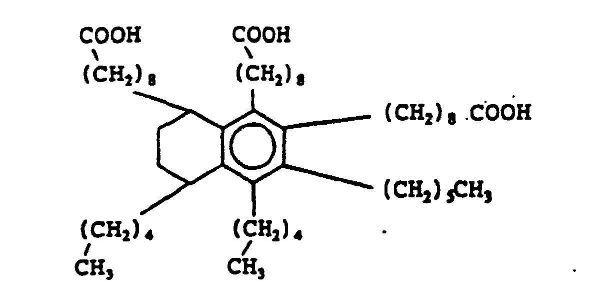

Each R⁷ is preferably a hydrogen or aliphatic hydrocarbon radical (alkyl) having from 1 to 18 carbon atoms and is more preferably of the formula (CH₂)ₓ wherein x is from 1 to 22. Dimer fatty acids may be formed by dimerizing fatty acids containing ethylenic linkages and from about 14 to about 22 carbon atoms in length. Monobasic acids which dimerize to form products as illustrated above include: oleic, elaidic, palmitoleic, linoleic, linolenic, licanic, arachidonic, erucic, clupanodonic, elaeostearic, etc. In commercial practice naturally occurring mixtures of these acids are generally employed for production of dimerized fatty acids. Such acids may be derived from sources such as tall oil fatty acids, tallow (animal grease) fatty acids and vegetable oils, e.g. soya, linseed, cottonseed, and other oils comprised of unsaturated fatty acid glycerides. In general, the dimerization is carried out by heating the monomeric acid at an elevated temperature, with or without a catalyst, while avoiding cracking and decarboxylation. U.S. patents 2,482,761, 2,664,429, 2,793,219, 2,793,220, 2,955,121, 3,076,003, 3,507,890 and 3,925,342 describe dimerization in further detail. Various types of dimerized fatty acids are available and the commercial products of dimerized fatty acids frequently contain trimerized fatty acids, which are tribasic acids formed as a by-product through the polymerization of three molecules of the fatty acids. Higher polybasic acids such as tetracarboxylic (C₇₂) acid and hexacarboxylic (C₁₀₈) acids may also be present. In addition, the commercial products may contain small percentages of isomerized monobasic acids or unreacted or fully saturated monomeric monobasic fatty acids which did not polymerize or which were not removed after the polymerization was carried out. The dimerized fatty acids employed to prepare the novel compositions of this invention preferably comprise a product having not more than about 70% tribasic acid and for very low non juicing characteristics not more than 10% monobasic acids. And preferably not more than 5% by weight monobasic acid based on the total weight of the polyacid component. The dimerized acid content is preferably at least 75% by weight based on the total weight of the surfactant. For improved color, the dimerized fatty acids may be partially or fully saturated by hydrogenation in a subsequent reaction step as described in Chapter 5 entitled "Hydrogenation of Fatty Acids" in the book "Fatty Acids in Industry" edited by Robert Johnson and Earle Fritz and published by Marcel Dekker, Inc. NY, NY. All dimer acids are liquid at 25°C even though their number average molecular weight is typically above 500 (for example, about 560). The dimerization process may produce a mixture of monoacids, diacids, triacids, and higher polymeric acids. Preferably more than about half of the dimerized acid is comprised of isomers with acyclic/cyclic aliphatic or aromatic structures. The cyclic structures include monocyclic and bicyclic aliphatic and aromatic structures. The cyclic structures generally form during the dimerization process, but their mode of formation is not critical to this invention. It is further more important to note that there is no rosin acid, abietic acid or derivatives thereof present in these compositions in part because such materials as abietic acid can be undesirably volatile and can result in juicing.

Preferred polyacids are acyclic/cyclic aliphatic polyacids and cyclic aromatic polyacids. The polyacid is preferably a high molecular weight polyacid having from 30 to 108 carbon atoms and preferred 32 to 60 carbon atoms. Preferably the polyacid is soluble and/or miscible in the thermoplastic compositions.

The phosphates (phosphoric esters) used for this purpose are represented by the following formula: 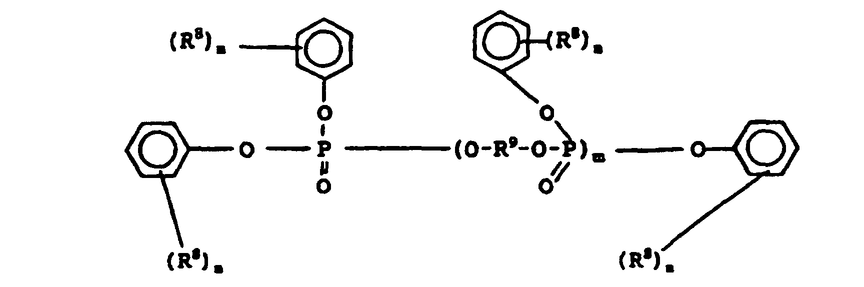 wherein R⁹ represents a divalent organic group, R⁸, which maybe the same or different, is selected from C₁ to C₂₀ aliphatic groups, C₃ to C₁ alicyclic groups and C₆ to C₁₈ aromatic groups, m represents a number between 1 to 30, and n represents an integer between 0 to 3.

Any of the phosphates represented by the formula can be used effectively by the compositions of this invention. R⁹ in the formula is a divalent organic group selected from among C₁ to C₂₀ aliphatic groups. C₃ to C₁₃ alicyclic groups and C₆ to C₁₈ aromatic groups. Among the aromatic groups are particularly preferred from the viewpoint of the thermal resistance needed during extrusion or molding. Particularly effective aromatic groups include, for example, the following:

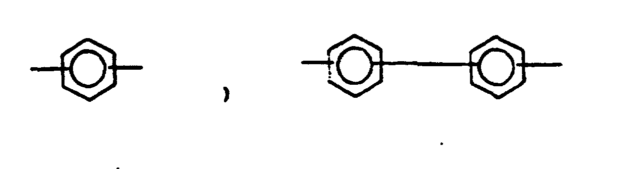

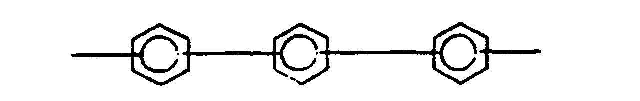

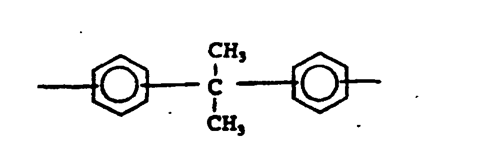

From the viewpoint of the cost of the starting material, R⁹ is preferably.

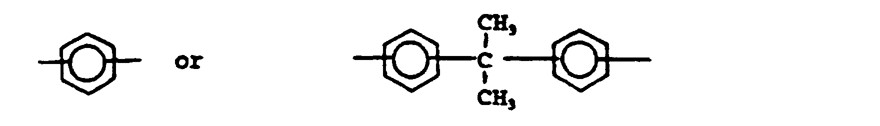

The groups represented by R⁸ maybe the same or different from one another, are a C₁ to C₂₀ aliphatic group, a C₃ to C₁₃ alicyclic group, or a C₆ to C₁₈ aromatic group. Furthermore, even these phosphoric esters having no substituents, i.e. those phosphoric esters of the formula wherein n is 0, serve to improve the impact resistance and tenacity, in addition to having sufficient heat resistance.

R⁸ is preferably a methyl or isopropyl group. Particularly, a methyl group is most preferred, due to the balance between improved impact resistance, tenacity, thermal resistance, and blooming on the one hand, and the cost of the starting materials on the other hand. The integer n is preferably between 0 to 2, and particularly 0 or 1 is preferred from the viewpoint of blooming and thermal resistance, m is at most 30 and is preferably at most 20.

The amount of the phosphate of the above formula used in the present invention is between about 0.5 to 20 wt.% based on the total weight of the thermoplastic composition, preferably 1 to 15 wt. % thereof, more preferably from 3 to 12 percent by weight thereof, for example, from 5 to 10 percent by weight thereof.

Typical of the preferred phosphate compounds to be employed in this invention would be those having the general formula 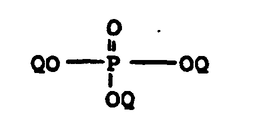 and nitrogen analogs thereof which each Q represents the same or different radicals including hydrocarbon radicals such as alkyl, cycloalkyl, aryl, alkyl substituted aryl and aryl substituted alkyl; halogen, hydrogen and combinations thereof provided that at least one of said Q's is aryl. Typical examples of suitable phosphates include, phenylbisdodecyl phosphate, phenylbisneopentyl phosphate, phenylethylene hydrogen phosphate, phenyl-bis-3,5,5'-trimethylhexyl phosphate), ethyldiphenyl phosphate, 2-ethylhexyl di(p-tolyl)phosphate, diphenyl hydrogen phosphate, bis(2-ethyl-hexyl) p-totylphosphate, tritolyl phosphate, bis(2-ethylhexyl)-phenyl phosphate, tri(nonylphenyl) phosphate, phenyl-methyl hydrogen phosphate, (di(dodecyl) p-tolyl phosphate, tricresyl phosphate, triphenyl phosphate, halogenated triphenyl phosphate, dibutylphenyl phosphate, 2-chloroethyldiphenyl phosphate, p-tolyl bis(2,5, 5'-trimethylhexyl) phosphate, 2-ethylhexyldiphenyl phosphate, diphenyl hydrogen phosphate, and the like. The preferred phosphates are those where each Q is aryl. The most preferred phosphate is triphenyl phosphate. It is also preferred to use triphenyl phosphate is combination with hexabromobenzene and, optionally. antimony oxide.

Also suitable as flame-retardant additives for this invention are compounds containing phosphorus-nitrogen bonds, such as phosphonitrilic chloride, phosphorus ester amides, phosphoric acid amides, phosphonic acid amides or phosphinic acid amides. These flame-retardant additives are commercially available.

Tetrafluoroethylene polymers which are suitable according to the invention have fluorine contents of 65-76% by weight, preferably 70-76% by weight. Examples are polytetrafluoroethylene, tetrafluoroethylene/hexafluoropropylene copolymers and tetrafluoroethylene copolymers containing small amounts of fluorine-free copolymerisable ethylenically unsaturated monomers. Such polymers are known from "Vinyl and Related Polymers", John Wiley & Sons, Inc., New York, 1952, pages 484-494; "Fluorpolymers", Wiley-Interscience, New York, 1972; "Encyclopedia of Polymer Science and Technology". Interscience Publishers. New York, Volume 13, 1970, pages 623-654; "Modern Plastics Encyclopedia", 1970-1971, Volume 47, No. 10 A, October 1970 McGraw-Hill, Inc., New York, pages 134, 138 and 774; "Modern Plastics Encyclopedia", 1975-1976, October 1975, Volume 52, No. 10 A, McGraw-Hill, Inc., New York, pages 27, 28 and 472 and U.S. Pat. Nos. 3,671,487, 3,723,373 and 3,838,092. The tetrafluoroethylene polymers of the present invention are in powder or latex form.

The phosphate is preferably present at a level of from 3 to 12 percent by weight based on the total weight of the composition, more preferably from 5 to 10 percent by weight thereof, and most preferably from 6 to 9 percent by weight thereof.

The tetraflouroethylene polymer is preferably present at a level of from 0.05 to 2 percent by weight based on the total weight of the composition, more preferably from 0.1 to 0.5 percent by weight thereof and most preferably from 0.2 to 0.4 percent by weight thereof.

### Examples

Aging test is performed in temperature and humidity controlled oven for "wet Aging" or in air circulated oven for dry aging. Samples were exposed to pre-decided conditions for various period of time and the physical properties were measured with and without aging. The aging conditions are in the rages described as follows:
Temperature: 40C - 90C
Relative humidity: Dry air, 30% - 100%

The physical properties are summarized in Table 1 and Table 2. All of the three samples retain good Izod impact after heat and humidity aging. However, it is also observed in Table 1 that the melt viscosity for example 1 is lower than that for comparative examples A and B with the same rubber content. In Table 2, examples 2 and 3 display lower viscosity as compared to the comparative example C.

The formulations of Examples A, B, 1, C, 2 and 3 contained 0.5 wt % phosphite (Irgafos 168), 0.1 wt % hindered phenolic (Irganox 1076) and 0.15 wt % of a lubricant (Glycolube P).

**TABLE 1**

| Examples | A | B | 1 |
|---|---|---|---|
| PC1 | 72.58 | 72.58 | 72.58 |
| lmw PC2 | 7.97 | 7.97 | 7.97 |
| lmw SAN 2 | 2.5 | 4.79 | 5.19 |
| ABS1 | 8 | | |
| ABS2 | | 5.71 | |
| ABSPA3 | | | 5.31 |
| RDP | 8 | 8 | 8 |
| PTFE | 0.2 | 0.2 | 0.2 |
| Rubber Content (%) | 4 | 4 | 4 |

| Kayeness Viscosity (500 F) | | | |
|---|---|---|---|
| 500/s | 3670 | 3780 | 3387 |
| 1000/s | 2755 | 2788 | 2491 |
| 1500/s | 2091 | 2118 | 1867 |

| Izod - Heat/Aging | | | |
|---|---|---|---|
| Control | 13.2 | 14 | 13.8 |
| 4 Days | 12.1 | 13.3 | 12.4 |
| 7 Days | 11.8 | 13.1 | 12.4 |
| 11 Days | 11.9 | 12 | 12.1 |
| 21 Days | 9.9 | 11 | 11.2 |
| 28 Days | 8.9 | 11 | 10.8 |

**TABLE 2**

| | C | 2 | 3 |
|---|---|---|---|
| PC3 | 80.55 | 80.55 | 80.55 |
| ABS1 | 0 | 0 | 0 |
| ABS2 | 8.6 | 0 | 0 |
| ABSPA-3 | 0 | 8 | 0 |
| ABSPA-4 | 0 | 0 | 8.1 |
| SAN1 | 1.9 | 2.5 | 2.4 |
| RDP | 8 | 8 | 8 |
| PTFE | 0.2 | 0.2 | 0.2 |
| Rubber Content (%) | 6.00 | 6.00 | 6.00 |

| Kayeness Viscosity (500 F) | | | |
|---|---|---|---|
| 500/s | 3379 | 3212 | 3113 |
| 1000/s | 2667 | 2570 | 2459 |
| 1500/s | 2132 | 2021 | 1950 |

| Izod (ft-lb/in) | Aging Conditions: 63 C/100%RH | | |
|---|---|---|---|
| Control | 11.5 | 11.8 | 11.5 |
| 7 Days | 11.1 | 10.1 | 10.8 |
| 14 Days | 10.8 | 10.5 | 10.9 |
| 21 Days | 10.4 | 10.2 | 10 |
| 28 Days | 9.8 | 9.6 | 9.1 |

PC1 is a moderate molecular weight bisphenol A polycarbonate having a weight average molecular weight of about 31.000.

lmw PC2 is a low molecular weight bisphenol A polycarbonate having a weight average molecular weight of about 20,000.

PC3 is a moderate molecular weight bisphenol A polycarbonate having a weight average molecular weight of about 26,000.

PTFE is a tetrafluoroethylene polymer.

SAN 1 is a moderate molecular weight styrene acrylonitrile copolymer having a weight average molecular weight of about 100,000.

lmw SAN 2 is a low molecular weight styrene-acrylonitrile copolymer having a weight average molecular weight of about 60.000.

ABS1 is an acrylonitrile-butadiene-styrene graft copolymer having 50% by weight rubber substrate.

ABS2 is an acrylonitrile-butadiene-styrene graft copolymer having 70% by weight rubber substrate.

ABSPA-3 is an acrylonitrile-butadiene-styrene graft copolymer having 75% by weight rubber substrate containing a polyacid.

ABSPA-4 is an acrylonitrile-butadiene-styrene graft copolymer having 74% by weight rubber substrate containing a polyacid.

## Claims

1. A thermoplastic composition comprising:
(a) an aromatic polycarbonate resin present at a level of from 60 to 90 weight percent based on the total weight of the composition;
(b) a vinyl aromatic-unsaturated nitrile rigid resin present at a level of from 2 to 15 percent by weight based on the total weight of the composition;
(c) a graft copolymer present at a level of from 2 to 10 percent by weight based on the total weight of the composition, said graft copolymer comprising
(i) a rubber substrate with a Tg of less than 0°C present at a level of from 40 to 90 weight percent based on the total weight of the graft copolymer;
(ii) a superstrate grafted to said substrate, said superstrate with a Tg greater than 20°C being derived from a compound selected from the group consisting of vinyl aromatics, unsaturated nitriles, alkyl (alkyl) acrylates and mixtures thereof; and
(iii) a polyacid selected from the group consisting of C₃₀ to C₁₀₈ polyacids;
(d) a phosphate flame retardant present at a level of from 3 to 12 percent by weight based on the total weight of the composition, and
(e) a tetrafluoroethylene polymer present at a level of from 0.05 to 2 percent by weight based on the total weight of the composition.

2. The composition of Claim 1 wherein said aromatic polycarbonate resin is a bisphenol A polycarbonate resin, said vinyl aromatic-unsaturated nitrile rigid resin is a styrene-acrylonitrile copolymer, and said graft copolymer is an acrylonitrile-butadiene-styrene copolymer.

3. The composition of Claim 2 wherein said phosphate is an aromatic phosphate.

4. The composition of Claim 1 wherein said aromatic polycarbonate resin is present at a level of from 75 to 85 percent by weight based on the total weight of the composition.

5. The composition of Claim 2 wherein said styrene-acrylonitrile copolymer has a weight average molecular weight of between 10,000 and 60,000.

6. The composition of Claim 5 wherein said styrene-acrylonitrile copolymer is present at a level of between 3 and 8 percent by weight based on the total weight of the composition.

7. The composition of Claim 1 wherein said phosphate is present at a level of from 5 to 10 percent by weight based on the total weight of the composition.

8. The composition of Claim 7 wherein said phosphate is a resorcinol diphosphoric acid tetraphenyl ester.

9. The composition of Claim 1 wherein said tetrafluoroethylene polymer is present at a level of from 0.1 to 0.5 percent by weight based on the total weight of the resin.

10. A thermoplastic resin composition comprising
(a) a bisphenol A polycarbonate resin having a weight average molecular weight of between 30,000 and 80,000 present at a level of from 60 to 80 percent by weight based on the total weight of the composition,
(b) a bisphenol A polycarbonate polymer present having a weight average molecular weight of between 2,000 and 20,000 present at a level of between 2 and 15 percent by weight based on the total weight of the composition,
(c) a styrene-acrylonitrile rigid copolymer having a number average molecular weight of between 10,000 and 50,000 present at a level of between 2 and 15 percent by weight based on the total of the composition,
(d) a graft copolymer present at a level of from 2 to 10 percent by weight based on the total weight of the composition, said graft copolymer comprising
(i) a rubber substrate with a Tg of less than 0°C present at a level of from 40 to 90 weight percent based on the total weight of the graft copolymer;
(ii) a superstrate grafted to said substrate, said superstrate with a Tg greater than 20°C being derived from a compound selected from the group consisting of vinyl aromatics, unsaturated nitriles, alkyl (alkyl) acrylates and mixtures thereof; and
(iii) a polyacid selected from the group consisting of C₃₀ to C₁₀₈ polyacids;
(e) an aromatic phosphate present at a level of from 3 to 12 percent by weight based on the total weight of the composition, and
(f) a tetrafluoroethylene polymer present at a level of from 0.05 to 2 percent by weight based on the total weight of the composition.

## Patentansprüche

1. Thermoplastische Verbindung, die:
(a) ein aromatisches Polycarbonatharz, das in einem Bereich von 60 bis 90 Gewichtsprozent, basierend auf dem Gesamtgewicht der Verbindung, vorliegt;
(b) ein vinyl-aromatisch-ungesättigtes Nitril-Hartharz, das in einem Bereich von 2 bis 15 Gewichtsprozent, basierend auf dem Gesamtgewicht der Verbindung, vorliegt;
(c) ein Pfropfcopolymer, das in einem Bereich von 2 bis 10 Gewichtsprozent, basierend auf dem Gesamtgewicht der Verbindung, vorliegt, wobei das Pfropfcopolymer
(i) ein Kautschukpfropfsubstrat mit einem T_{g} von weniger als 0°C, das in einem Bereich von 40 bis 90 Gewichtsprozent, basierend auf dem Gesamtgewicht des Pfropfcopolymers vorliegt;
(ii) eine Pfropfauflage, die auf das Pfropfsubstrat aufgepfropft ist, wobei die Pfropfauflage ein T_{g} größer als 20 °C hat und von einer Verbindung stammt, ausgewählt aus der Gruppe, bestehend aus vinylaromatischen Verbindungen, ungesättigten Nitrilen, Alkyl(alkyl)acrylaten und Mischungen daraus; und
(iii) eine Polysäure, ausgewählt aus der Gruppe, bestehend aus C₃₀ bis C₁₀₈ Polysäuren;
aufweist,
(d) ein Phosphat-Flammschutzmittel, das in einem Bereich von 3 bis 12 Gewichtsprozent, basierend auf dem Gesamtgewicht der Verbindung vorliegt; und
(e) ein Tetrafluorethylenpolymer, das in einem Bereich von 0,05 bis 2 Gewichtsprozent, basierend auf dem Gesamtgewicht der Verbindung vorliegt;
aufweist.

2. Verbindung nach Anspruch 1, wobei das aromatische Polycarbonatharz Bisphenol A-Polycarbonatharz ist, das vinyl-aromatisch-ungesättigte Nitrilhartharz Styrolacrylnitrilcopolymer und das Pfropfcopolymer ein Acrylnitril-Butadien-Styrol-Copolymer ist.

3. Verbindung nach Anspruch 2, wobei das Phosphat ein aromatisches Phosphat ist.

4. Verbindung nach Anspruch 1, wobei das aromatische Polycarbonatharz in einem Bereich von 75 bis 85 Gewichtsprozent, bezogen auf das Gesamtgewicht der Verbindung, vorliegt.

5. Verbindung nach Anspruch 2, wobei das Styrolacrylnitrilcopolymer ein Gewichtsmittel des Molekulargewichts zwischen 10 000 und 60 000 aufweist.

6. Verbindung nach Anspruch 5, wobei das Styrolacrylnitrilcopolymer in einem Bereich von 3 bis 8 Gewichtsprozent, bezogen auf das Gesamtgewicht der Verbindung, vorliegt.

7. Verbindung nach Anspruch 1, wobei das Phosphat in einem Bereich von 5 bis 10 Gewichtsprozent, bezogen auf das Gesamtgewicht der Verbindung, vorliegt.

8. Verbindung nach Anspruch 7, wobei das Phosphat eine Resorcinoldiphosphorsäuretetraphenylester ist.

9. Verbindung nach Anspruch 1, wobei das Tetrafluorethylenpolymer in einem Bereich von 0,1 bis 0,5 Gewichtsprozent, bezogen auf das Gesamtgewicht des Harzes, vorliegt.

10. Thermoplastische Harzverbindung, die:
(a) ein Bisphenol A Polycarbonatharz mit einem Gewichtsmittel des Molekulargewichts von zwischen 30 000 und 80 000, das in einem Bereich von 60 bis 80 Gewichtsprozent, basierend auf dem Gesamtgewicht der Verbindung, vorliegt;
(b) ein Bisphenol A Polycarbonatpolymer mit einem Gewichtsmittel des Molekulargewichts von zwischen 2 000 und 20 000, das in einem Bereich von 2 bis 15 Gewichtsprozent, basierend auf dem Gesamtgewicht der Verbindung, vorliegt;
(c) ein Styrolacrylnitrilhartcopolymer mit einem Gewichtsmittel des Molekulargewichts von zwischen 10 000 und 50 000, das in einem Bereich von 2 bis 15 Gewichtsprozent, basierend auf dem Gesamtgewicht der Verbindung, vorliegt;
(d) ein Pfropfcopolymer, das in einem Bereich von 2 bis 10 Gewichtsprozent, basierend auf dem Gesamtgewicht der Verbindung, vorliegt, wobei das Pfropfcopolymer
(i) ein Kautschukpfropfsubstrat mit einem T_{g} von weniger als 0 °C, das in einem Bereich von 40 bis 90 Gewichtsprozent, basierend auf dem Gesamtgewicht des Pfropfcopolymers vorliegt;
(ii) eine Pfropfauflage, die auf das Pfropfsubstrat aufgepfropft ist, wobei die Pfropfauflage einen T_{g} größer als 20 °C hat und von einer Verbindung stammt, ausgewählt aus der Gruppe, bestehend aus vinylaromatischen Verbindungen, ungesättigten Nitrilen, Alkyl(alkyl)acrylaten und Mischungen daraus; und
(iii) eine Polysäure, ausgewählt aus der Gruppe, bestehend aus C₃₀ bis C₁₀₈ Polysäuren;
aufweist,
(e) ein aromatische Phosphat, das in einem Bereich von 3 bis 12 Gewichtsprozent, basierend auf dem Gesamtgewicht der Verbindung vorliegt; und
(f) ein Tetrafluorethylenpolymer, das in einem Bereich von 0,05 bis 2 Gewichtsprozent, basierend auf dem Gesamtgewicht der Verbindung, vorliegt;
aufweist.

## Revendications

1. Composition thermoplastique qui comprend :
(a) une résine de polycarbonate aromatique qui est présente en une proportion de 60 à 90 % en poids par rapport au poids total de la composition,
(b) une résine rigide de nitrile insaturé et de monomère aromatique vinylique, qui est présente en une proportion de 2 à 15 % en poids par rapport au poids total de la composition,
(c) un copolymère greffé qui est présent en une proportion de 2 à 10 % en poids par rapport au poids total de la composition, ledit copolymère greffé comprenant :
(i) un substrat de caoutchouc ayant une température de transition vitreuse Tv inférieure à 0 °C et représentant 40 à 90 % en poids du poids total du polymère greffé,
(ii) une couche supérieure greffée audit substrat, ladite couche supérieure ayant une température de transition vitreuse Tv supérieure à 20 °C et provenant d'un composé choisi parmi les monomères aromatiques vinyliques, les nitriles insaturés, les (alkyl)acrylates d'alkyle et leurs mélanges, et
(iii) un polyacide choisi parmi les polyacides en C₃₀ à C₁₀₈,
(d) un ignifugeant du type phosphate qui est présent en une proportion de 3 à 12 % en poids par rapport au poids total de la composition, et
(e) un polymère de tétrafluoroéthylène qui est présent en une proportion de 0,05 à 2 % en poids par rapport au poids total de la composition.

2. Composition selon la revendication 1, dont ladite résine de polycarbonate aromatique est une résine de polycarbonate issue du bisphénol A, ladite résine rigide de nitrile insaturé et de monomère aromatique vinylique est un copolymère de styrène et d'acrylonitrile, et ledit copolymère greffé est un copolymère d'acrylonitrile, de butadiène et de styrène.

3. Composition selon la revendication 2, dont ledit phosphate est un phosphate aromatique.

4. Composition selon la revendication 1, dans laquelle ladite résine de polycarbonate aromatique est présente en une proportion de 75 à 85 % en poids par rapport au poids total de la composition.

5. Composition selon la revendication 2, dont ledit copolymère de styrène et d'acrylonitrile a une masse moléculaire moyenne en poids comprise entre 10 000 et 60 000.

6. Composition selon la revendication 5, dans laquelle ledit copolymère de styrène et d'acrylonitrile est présent en une proportion de 3 à 8 % en poids par rapport au poids total de la composition.

7. Composition selon la revendication 1, dans laquelle ledit phosphate est présent en une proportion de 5 à 10 % en poids par rapport au poids total de la composition.

8. Composition selon la revendication 7, dont ledit phosphate est un ester tétraphénylique d'acide résorcinol-diphosphorique.

9. Composition selon la revendication 1, dans laquelle ledit polymère de tétrafluoroéthylène est présent en une proportion de 0,1 à 0,5 % en poids par rapport au poids total de la résine.

10. Composition à base de résine thermoplastique, qui comprend :
(a) une résine de polycarbonate issue du bisphénol A, ayant une masse moléculaire moyenne en poids comprise entre 30 000 et 80 000, qui est présente en une proportion de 60 à 80 % en poids par rapport au poids total de la composition,
(b) un polymère polycarbonate issu du bisphénol A, ayant une masse moléculaire moyenne en poids comprise entre 2 000 et 20 000, qui est présent en une proportion de 2 à 15 % en poids par rapport au poids total de la composition,
(c) un copolymère rigide de styrène et d'acrylonitrile, ayant une masse moléculaire moyenne en nombre comprise entre 10 000 et 50 000, qui est présent en une proportion de 2 à 15 % en poids par rapport au poids total de la composition,
(d) un copolymère greffé qui est présent en une proportion de 2 à 10 % en poids par rapport au poids total de la composition, ledit copolymère greffé comprenant :
(i) un substrat de caoutchouc ayant une Tv inférieure à 0 °C et représentant 40 à 90 % en poids du poids total du copolymère greffé,
(ii) une couche supérieure greffée audit substrat, ladite couche supérieure ayant une Tv supérieure à 20 °C et étant issue d'un composé choisi parmi les composés aromatiques vinyliques, les nitriles insaturés, les (alkyl)acrylates d'alkyle et leurs mélanges, et
(iii) un polyacide choisi parmi les polyacides en C₃₀ à C₁₀₈,
(e) un phosphate aromatique qui est présent en une proportion de 3 à 12 % en poids par rapport au poids total de la composition, et
(f) un polymère de tétrafluoroéthylène qui est présent en une proportion de 0,05 à 2 % en poids par rapport au poids total de la composition.
